# NEW EUROPEAN PATENT SPECIFICATION

(11) **EP 0 915 264 B2**
(45) Date of publication and mention of the opposition decision: **10.02.2010**
(45) Mention of the grant of the patent: 31.08.2005
(21) Application number: 98308913.7
(22) Date of filing: 30.10.1998
(51) Int. Cl.: F16D 3/84, F16J 3/04

(54) **Protective bellows**
Schutzbalg
Soufflet de protection

(30) Priority: 04.11.1997 GB 9723301
(43) Date of publication of application: 12.05.1999
(73) Proprietor: TRELLEBORG AB, 231 22 Trelleborg (SE)
(72) Inventor: Breheret, Joel, 44119 Treillieres (FR)
(74) Representative: Foster, David Martyn

(56) References cited:
- EP-A- 0 010 999
- GB-A- 2 042 102
- JP-A- 8 232 971
- US-A- 4 280 340
- US-A- 5 529 538

## Description

The invention relates to a protective bellows according to the preamble of claim 1.

Such a bellows is shown in GB-A-2 042102. In this bellows, the fixing collar has a peripherally extending circular wall from spaced-apart inward portions of which extend solidly moulded portions which match parts of the outside surface of a universal joint housing between lobes thereof. Such solidly moulded portions are relatively massive, may not be easy to produce, and may cause variation of the gripping force of the collar around the circumference thereof. The invention is concerned with this problem.

According to the invention, the bellows as first set forth above is characterised by the features of claim 1.

Protective bellows embodying the invention will now be described, by way of example only, with reference to the accompanying diagrammatic drawings in which:
Figure 1 is a perspective view of part of a transmission joint of a vehicle;
Figure 2 is a perspective view of one of the protective bellows, for fitting onto the joint of Figure 1; and
Figure 3 corresponds to Figure 2 but shows a modified form of the bellows of that Figure.

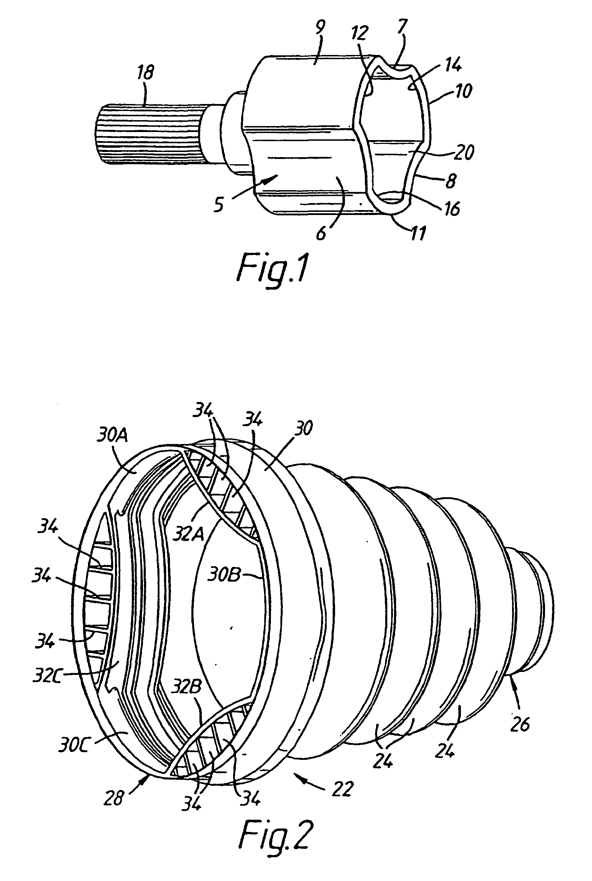

Figure 1 shows part of an articulated joint for the transmission of a vehicle, particularly for front wheel drive transmission. The joint comprises a housing 5, preferably made of steel, of tri-lobed construction. Its external surface is provided with grooves 6,7 and 8 between lobes 9,10 and 11 with corresponding grooves 12,14 and 16 on its internal surface. The lobes 9,10 and 11 are formed by respective parts of the same cylindrical surface. The grooves 12,14 and 16 locate the balls or rollers (not shown) of the joint which allow the necessary articulating movement between the two parts of the vehicle transmission which are to be interconnected by the joint. As shown, the housing 5 is connected to a splined shaft 18 forming one of the parts of the transmission. The other part (not shown) comprises a shaft which is, in use, drivingly connected to the balls or rollers of the joint via the opening 20 of the housing 5.

In order to protect the mechanism of the joint from contamination and dust and to retain the necessary lubricant within the housing 5, a flexible bellows is attached to the housing 5 so as to close the opening 20.

One form of the protective bellows is shown at 22 in Figure 2. Preferably it is produced from thermoplastics material by blow-moulding. It comprises bellows turns 24 integrally extending with successively increasing diameters from a small diameter fixing collar 26 to a large diameter fixing collar 28. In use, the fixing collar 26 elastically and sealingly grips around the drive shaft (not shown) of the transmission which is connected to the balls or rollers within the housing 5 (Figure 1), and the large diameter collar 28 similarly grips the housing 5 in the manner to be explained.

The fixing collar 28 has an internal surface matched to shape the external surface of the housing 5. Thus, it comprises portions 30A,30B and 30C which form part of the inner cylindrical surface of a rim 30 and which are interconnected by inwardly curved thin integral wall portions 32A,32B and 32C. The interrupted cylindrical wall portions 30A,30B and 30C are sized and shaped and mutually spaced to match the sizes, shapes and positions of the part-cylindrical surface portions 9,10 and 11 of Figure 1. Similarly, the inwardly curved walls 32A,32B and 32C of the fixing collar are sized, shaped and mutually spaced so as to present inwardly facing surfaces matching the surfaces of the grooves 6,7 and 8 of the housing 5.

The inwardly curved walls 32A,32B and 32C are supported from the inner cylindrical surface of the rim 30 by means of integral connecting ribs 34 which extend in radial or chordal directions.

In use, the bellows 22, with its small diameter collar 26 fitted over the drive shaft (not shown), is fitted onto the housing 5 (Figure 1) so that the large diameter collar 28 externally and sealingly grips the external surface of the housing, with the part cylindrical portions 30A,30B and 30C engaging the part-cylindrical surface portions 9,10 and 11 and with the inwardly curved walls 32A,32B and 32C engaging the grooves 6,7 and 8.

The fitting process may be completed by means of an encircling band which is tightened around the external surface of the rim 30.

The ribs 34 are shaped, positioned and spaced apart so that the gripping pressure applied by the fixing collar 28 to the external surface of the housing 5 is substantially constant around the whole circumference. Preferably, there are at least three ribs 34 for each inwardly curved wall portion 32A,32B,32C. The inwardly curved wall portions 32A,32B and 32C and the ribs 34 have a thickness between a minimum value of 1 mm and a maximum value of 4 mm.

The form of the collar 28 is relatively simple to realise using blow-moulding (injection) techniques. In addition, the arrangement of the inwardly curved walls 32A,32B,32C with the supporting ribs 34 is advantageous as compared with arrangements which use solidly moulded similarly-shaped portions instead. The latter arrangements are relatively massive. Furthermore, they are difficult to produce by moulding: difficulties of removal from the mould occur. Furthermore, such arrangements cause there to be a significant variation in the gripping force applied around the circumference of the fixing collar.

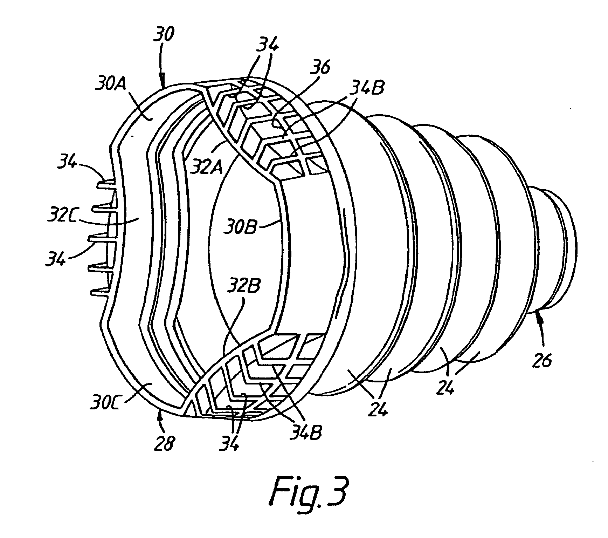

In the modification shown in Figure 3, in which items corresponding to those in Figure 2 are similarly referenced, the continuous circular rim 30 of Figure 2 is not present in the regions of the inwardly curved integral wall portions 32A,32B and 32C. Instead, the ribs 34 in Figure 3 are extended to have outer extremities 34B lying in the same circumferential plane as the outer surfaces of the interrupted cylindrical wall portions 30A,30B and 30C. The ribs 34 are strengthened by circumferentially directed ribs 36 in order to ensure that the fixing collar 28 seals effectively to the external surface of the housing 5. As before, the ribs 34,36 can be arranged so that the gripping pressure applied by the fixing collar 28 to the external surface of the housing 5 is substantially constant around the whole circumference.

The arrangements described and illustrated are also advantageous in that they enable the bellows to be easily and simply fitted onto a tri-lobed housing such as shown in Figure 1. It is therefore not necessary for the housing to be formed so as to be tri-lobed on its inner surface but smoothly cylindrical on its outer surface; such an arrangement is relatively difficult to manufacture and produces a relatively heavy housing. The arrangements described and illustrated are also advantageous as compared with arrangements in which a housing of the form shown in Figure 1 is modified by the addition of an external annular rim on the housing for receiving a fixing collar of wholly cylindrical internal surface.

## Claims

1. A protective bellows formed integrally with a fixing collar (28) for attaching the bellows to and around an externally tri-lobed housing (5) of an articulation joint having three lobes (9, 10, 11) interconnected by three grooves (6, 7 8), the fixing collar (28) comprising resilient material defining three curved parts (30A, 30B, 30C) of a peripheral inside surface of the fixing collar (28) matching and for engaging respective lobes (9, 10, 11) of the housing (5) and three surface portions (32A, 32B, 32C) mounted on the resilient material and peripherally inwardly directed therefrom matching and for engaging respective grooves (6, 7, 8) of the housing (5), **characterised in that** each surface portion is formed by a flexible wall portion (32A, 32B, 32C) resiliently supported by a plurality of peripherally spaced said ribs (34) formed integrally with and arranged externally of the flexible wall portion (32A, 32B, 32C), each rib is made of a flexible material that extends in a radial or chordal direction each flexible wall portion (32A, 32B, 32C) and each flexible rib having a thickness between a minimum value of 1 mm and a maximum value of 4mm.

2. A bellows according to claim 1, **characterised in that** the resilient material defines the whole of the peripheral inside surface and **in that** the peripherally spaced ribs (34) extend from the outside surface of each flexible wall portion to the peripheral inside surface.

3. A bellows according to claim 1, **characterised in that** the resilient material is peripherally interrupted in the region of each flexible wall portion (32A, 32B,32C), each flexible wall portion having an outside surface disposed externally from said surface portion, and **in that** the peripherally spaced ribs (34) extend from the outside surface of each flexible wall portion (32A, 32B,32C) to terminate in a circumferential plane.

4. A bellows according to claim 3, **characterised by** further support means (36) extending in a circumferential direction for connecting and providing mutual support for each pair of adjacent ones of the peripherally spaced ribs (34).

5. A bellows according to claim 4, **characterised in that** each further support means (36) is a respective rib made of flexible material.

6. A bellows according to any preceding claims, **characterised in that** it is moulded from thermoplastics material.

## Patentansprüche

1. Schutzbalg, der integral mit einem Befestigungskragen (28) zum Anbringen des Balgs an einem dreinockigen Gehäuse (5) einer Gelenkverbindung ausgebildet ist, die drei Nocken (9, 10, 11) aufweist, die durch drei Nuten (6, 7, 8) miteinander verbunden sind, wobei der Befestigungskragen (28) ein nachgiebiges Material umfasst, das drei gekrümmte Abschnitte (30A, 30B, 30C) einer Umfangs-Innenfläche des Befestigungskragens (28) definiert, die an entsprechende Nocken (9, 10, 11) des Gehäuses (5) passen und mit ihnen in Eingriff kommen, sowie drei Oberflächenabschnitte (32A, 32B, 32C), die an dem nachgiebigen Material angebracht sind und davon in Umfangsrichtung nach innen gerichtet sind und in entsprechende Nuten (6, 7, 8) des Gehäuses (5) passen und mit ihnen in Eingriff kommen, **dadurch gekennzeichnet, dass** jeder Oberflächenabschnitt durch einen flexiblen Wandabschnitt (32A, 32B, 32C) gebildet wird, der federnd durch eine Vielzahl in Umfangsrichtung beabstandeter Rippen (34) getragen wird, die integral mit dem flexiblen Wandabschnitt (32A, 32B, 32C) ausgebildet und außerhalb desselben angeordnet sind, wobei jede Rippe aus einem flexiblen Material besteht, das sich in einer Radial- oder Sehnenrichtung jedes flexiblen Wandabschnitts (32A, 32B, 32C) erstreckt, und jede flexible Rippe eine Dicke zwischen einem Minimalwert von 1 mm und einem Maximalwert von 4 mm hat.

2. Schutzbalg nach Anspruch 1, **dadurch gekennzeichnet, dass** das nachgiebige Material die gesamte Umfangs-Innenfläche definiert, und dadurch, dass sich die am Umfang beabstandeten Rippen (34) von der Außenseite jedes flexiblen Wandabschnitts zu der Umfangs-Innenfläche erstrecken.

3. Schutzbalg nach Anspruch 1, **dadurch gekennzeichnet, dass** das nachgiebige Material am Umfang in dem Bereich jedes flexiblen Wandabschnitts (32A, 32B, 32C) unterbrochen ist, der eine Außenseite aufweist, die extern von dem Seitenabschnitt angeordnet ist, und dadurch, dass sich die am Umfang beabstandeten Rippen (34) von der Außenseite jedes flexiblen Wandabschnitts (32A, 32B, 32C) aus erstrecken, um in einer Umfangsebene zu enden.

4. Schutzbalg nach Anspruch 3, **gekennzeichnet durch** weitere Stützeinrichtungen (36), die sich in einer Umfangsrichtung erstrecken, um jedes Paar von benachbarten der am Umfang beabstandeten Rippen (34) zu verbinden und ihnen wechselseitig Halt zu verleihen.

5. Schutzbalg nach Anspruch 4, **dadurch gekennzeichnet, dass** jede weitere Stützeinrichtung (36) eine entsprechende Rippe ist, die aus flexiblem Material besteht.

6. Schutzbalg nach einem der vorhergehenden Ansprüche, **dadurch gekennzeichnet, dass** er aus thermoplastischem Material geformt ist.

## Revendications

1. Soufflet de protection formé de façon monobloc avec un collier de fixation (28) afin de fixer le soufflet sur et autour d'un boîtier (5) extérieurement trilobé d'un joint articulé ayant trois lobes (9, 10, 11) interconnectés par trois rainures (6, 7, 8), le collier de fixation (28) comportant une matière élastique définissant trois parties courbes (30A, 30B, 30C) d'une surface intérieure périphérique du collier de fixation (28) correspondant à et destinées à engager les lobes respectifs (9, 10, 11) du boîtier (5) et trois parties de surface (32A, 32B, 32C) montées sur la matière élastique et dirigées périphériquement vers l'intérieur correspondant à et destinées à engager les rainures (6, 7, 8) respectives du boîtier (5), **caractérisé en ce que** chaque partie de surface est formée par une partie de paroi flexible (32A, 32B, 32C) supportée de manière élastique par une pluralité de nervures (34) espacées périphériquement, formées de façon monobloc avec et disposées à l'extérieur de la partie de paroi flexible (32A, 32B, 32C), chaque nervure est en une matière élastique qui s'étend dans une direction radiale ou cordale, chaque partie de paroi flexible (32A, 32B, 32C) et chaque nervure flexible ayant une épaisseur entre une valeur minimale de 1 mm et une valeur maximale de 4 mm.

2. Soufflet selon la revendication 1, **caractérisé en ce que** la matière élastique définit la totalité de la surface intérieure périphérique et **en ce que** les nervures (34) espacées de manière périphérique s'étendent à partir de la surface extérieure de chaque partie de paroi flexible jusqu'à la surface intérieure périphérique.

3. Soufflet selon la revendication 1, **caractérisé en ce que** la matière élastique est interrompue de manière périphérique dans la zone de chaque partie de paroi flexible (32A, 32B, 32C), chaque partie de paroi flexible ayant une surface extérieure disposée de manière externe par rapport à ladite partie de surface et **en ce que** les nervures (34) espacées de manière périphérique s'étendent à partir de la surface extérieure de chaque partie de paroi flexible (32A, 32B, 32C) afin de se terminer dans un plan circonférentiel.

4. Soufflet selon la revendication 3, **caractérisé par** d'autres moyens de support (36) s'étendant dans une direction circonférentielle afin de relier et procurer un support mutuel pour chaque paire de moyens adjacents des nervures (34) espacées de manière périphérique.

5. Soufflet selon la revendication 4, **caractérisé en ce que** chacun des autres moyens de support (36) est constitué par une nervure respective fabriquée en matière flexible.

6. Soufflet selon l'une quelconque des revendications précédentes, **caractérisé en ce qu'**il est moulé à partir d'une matière thermoplastique.
